Europäisches Patentamt

European Patent Office

Office européen des brevets

(19)

(11) Numéro de publication : **0 033 280**
**B1**

(12) **FASCICULE DE BREVET EUROPÉEN**

(45) Date de publication du fascicule du brevet :
04.07.84

(51) Int. Cl.³ : **F 02 P 5/04**, F 02 P 3/04

(21) Numéro de dépôt : **81400112.9**

(22) Date de dépôt : **27.01.81**

(54) **Dispositif de commande de bobine d'allumage pour moteur à combustion interne équipé d'un calculateur électronique d'avance à l'allumage.**

(30) Priorité : **29.01.80 FR 8001834**

(43) Date de publication de la demande :
**05.08.81 Bulletin 81/31**

(45) Mention de la délivrance du brevet :
**04.07.84 Bulletin 84/27**

(84) Etats contractants désignés :
**DE GB IT SE**

(56) Documents cités :
**FR-A- 2 230 992**
**FR-A- 2 312 882**
**US-A- 4 104 570**
**US-A- 4 169 438**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Deleris, Robert**
**36, Square des Marroniers**
**F-78870 Bailly (FR)**

(74) Mandataire : **Colas, Jean-Pierre et al**
**8 et 10 Avenue Emile Zola**
**F-92109 Boulogne-Billancourt (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention est relative à un dispositif de commande de bobine d'allumage pour moteur à combustion interne équipé d'un calculateur électronique d'avance à l'allumage.

Dans tout système d'allumage inductif, la génération de l'étincelle est assurée par la coupure d'un courant important circulant dans le primaire d'une bobine haute tension, engendrant de ce fait une surtension au secondaire relié aux bougies. L'énergie emmagasinée dans une bobine est de la forme $1/2\ LI^2$, où L est le coefficient de self-induction et $I^2$ le carré de l'intensité du courant circulant au primaire juste avant la coupure. Sur les allumages classiques à rupture par contact, le rapport cyclique de la fermeture des contacts étant maintenu constant à 66 % de la période, la génération de l'étincelle en toute circonstance résulte d'un compromis entre une bobine chauffant par effet Joule en régime de ralenti du moteur et une quantité d'énergie suffisante emmagasinée pour l'allumage aux régimes élevés.

Dans un système d'allumage électronique pour moteur à combustion interne à cartographie programmée, il est judicieux de réserver de la place en mémoire pour permettre d'engendrer un angle de mise en conduction de la bobine variable avec la vitesse de rotation du moteur et ainsi supprimer ce compromis. On peut aussi, par l'intermédiaire de la valeur de la vitesse, tenir compte de la tension batterie plus faible dans la phase de démarrage.

Dans la plupart des systèmes connus d'allumage à calculateur électronique, un décompteur chargé au complément à 180° de l'angle d'avance à l'allumage est décrémenté à chaque degré de rotation du vilebrequin et commande la remise à zéro d'une bascule commandant la circulation du courant électrique dans le primaire de la bobine. La mise à l'état logique haut de la bascule est commandée par la sortie coïncidence d'un comparateur logique connecté, d'une part, aux sorties du décompteur et, d'autre part, à la mémoire qui donne la valeur de l'angle de mise en conduction de la bobine.

Un inconvénient d'un tel système réside dans le fait qu'il est incapable de provoquer la mise en conduction de la bobine quand la valeur de l'angle de conduction est supérieure au complément à 180° de l'angle d'avance.

En outre, son inconvénient majeur réside dans la qualité du signal de décrémentation. Il est difficile, en effet, de réaliser mécaniquement, en grande série, des cibles et des capteurs donnant une résolution d'un degré vilebrequin. On fabrique une cible ordinairement avec un nombre de dents généralement inférieur à 50 et on procède par interpolation pour engendrer 360 impulsions par tour de vilebrequin. Les systèmes d'interpolation ont une bonne précision quand le moteur fonctionne en régime stabilisé mais, en cas de fonctionnement à régime variable et, notamment dans le cas de démarrage du moteur par grand froid, le nombre d'impulsions restituées par demi-tour est généralement très différent de 180, ce qui provoque une erreur sur la valeur de l'angle d'avance à l'allumage égale à la différence entre la valeur restituée sur un demi-tour et le nombre théorique. Une solution consiste à déclencher l'émission d'une étincelle lors du passage d'un repère lié au volant moteur devant un capteur fixé sur le carter du volant moteur tant que la vitesse de rotation n'a pas atteint un certain seuil, mais cette solution ne permet pas d'exploiter au maximum la souplesse offerte par la génération électronique d'une loi d'avance à l'allumage.

La présente invention vise essentiellement à éviter ces deux inconvénients et, à cet effet, elle a pour objet un dispositif de commande de bobine d'allumage pour moteur à combustion interne par explosion à l'intérieur de plusieurs cylindres, du type comportant une cible présentant un nombre déterminé d'accidents régulièrement répartis à sa périphérie, solidaire en rotation du vilebrequin, au moins un capteur de position fixe, associé à ladite cible, une bobine d'allumage, un distributeur d'étincelles destinées à provoquer des explosions à l'intérieur des différents cylindres du moteur successivement par l'intermédiaire de bougies associées, un étage de traitement du signal prélevé par le capteur de position et délivrant notamment un signal de synchronisation et un signal de vitesse, un calculateur électronique d'avance à l'allumage délivrant sur une première sortie une valeur numérique d'angle d'avance à l'allumage et sur une seconde sortie une valeur numérique brute d'angle de conduction de ladite bobine, un étage de puissance pour la commande de ladite bobine d'allumage, et un étage générateur de signal de commande de la bobine connecté entre les deux sorties du calculateur d'avance électronique et l'étage de puissance commandant la bobine d'allumage, ledit étage générateur du signal de commande comprenant un premier compteur et un second compteur et traitant l'angle de mise en conduction de la bobine et l'angle d'avance à l'allumage au moyen de trois types de signaux délivrés par le bloc de traitement du signal capteur, caractérisé en ce que, à chaque signal de synchronisation, lesdits premier et second compteurs sont préchargés par le calculateur de la valeur numérique de l'angle d'avance à l'allumage, ladite valeur numérique étant constituée par la somme d'un nombre d'accidents de la cible chargé dans le premier compteur et d'un nombre de subdivisions angulaires de résolution n fois supérieure aux accidents de la cible chargé dans le second compteur, en ce que le premier compteur est incrémenté à son entrée d'horloge par un troisième signal qui est engendré à la sortie de l'étage de traitement de signal et dont la fréquence est le produit de la vitesse de rotation du moteur par le nombre d'accidents théoriques supportés par la périphérie de la cible, en ce que le second compteur est incrémenté à son entrée d'horloge, lorsque le premier compteur est arrivé à sa valeur de saturation, par le signal de vitesse dont la fréquence est n fois supérieure à celle du troisième signal, et en ce que ledit dispositif comprend également un étage additionneur relié par une première série d'entrées sur les sorties du premier compteur et par une seconde série d'entrées à la seconde sortie du calculateur fournissant la valeur brute d'angle de conduction, ainsi qu'un circuit logique connecté entre, d'une part, l'étage additionneur et les deux compteurs et, d'autre part, l'étage de puissance, et commandant la mise en conduction de la bobine par ce dernier entre une première position angulaire du vilebrequin correspondant à la somme de la valeur numérique brute d'angle de conduction et le contenu du premier compteur et une deuxième position angulaire du vilebrequin correspondant à l'état de saturation des deux compteurs.

D'autres caractéristiques ressortiront de la description qui suit et qui n'est donnée qu'à titre d'exemple. A cet effet, on se reportera aux dessins joints dans lesquels :

— la figure 1 représente, sous forme de schéma-bloc, un exemple de réalisation d'un dispositif suivant l'invention incorporant un calculateur électronique d'avance à l'allumage ;

— la figure 2 représente un mode de réalisation du bloc de génération du signal de commande pour la bobine d'allumage suivant la figure 1 ;

— la figure 3 représente le chronogramme des signaux présents aux points essentiels du bloc de génération de la figure 2.

Il doit être bien compris qu'un dispositif de commande de bobine d'allumage suivant la présente invention est nécessairement associé à un calculateur électronique d'avance à l'allumage ou autre un système équivalent permettant de transformer la valeur d'avance à l'allumage, résultat du calcul, en un instant d'allumage et au système permettant d'emmagasiner dans la bobine l'énergie requise par la bougie pour engendrer une étincelle. Un tel calculateur est notamment décrit dans les demandes de brevets français ci-après déposées par la demanderesse :

— FR-A-2.327.421 et FR-A-2.349.041 pour « Procédé et dispositif de commande électronique d'allumage pour un moteur à combustion interne » ;

— FR-A-2.414.127 pour « Dispositif de sécurité associé à une commande de temps de conduction d'une bobine » ;

— FR-A-2.446.467 pour « Procédé et appareillage de repérage de la position angulaire d'une pièce animée d'un mouvement de rotation ».

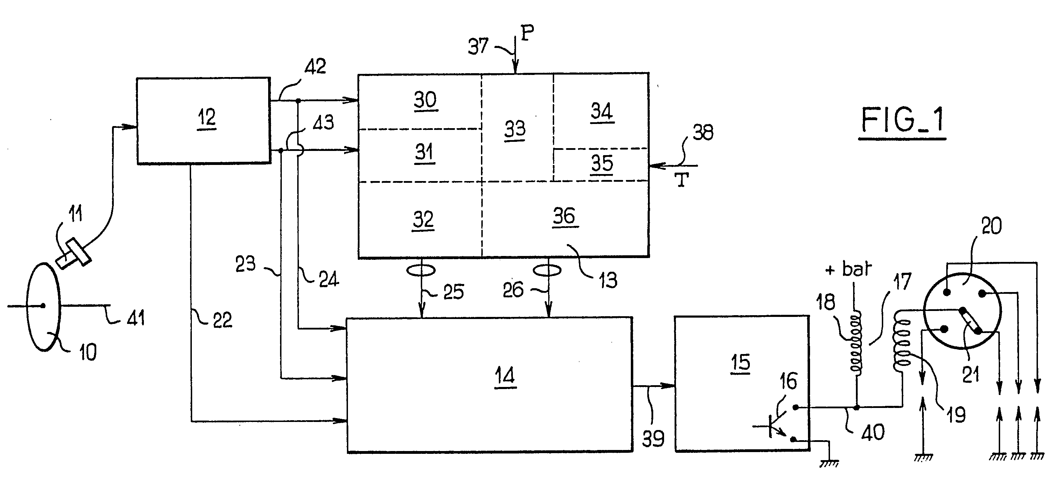

A la figure 1 qui représente sous forme de schéma-bloc un exemple de réalisation d'un dispositif de commande de bobine d'allumage suivant l'invention, un calculateur électronique d'avance à l'allumage 13 reçoit sur une entrée 42 un signal de synchronisation Sy et, sur une seconde entrée 43, un signal de vitesse V, signaux qui sont obtenus à partir d'un étage de traitement 12 du signal prélevé par un capteur 11 de position détectant le passage des dents dont est munie à sa périphérie une cible 10 fixée sur le vilebrequin 41 et tournant en synchronisme avec lui. Le capteur 11 donne une image électrique permanente de la périphérie de la cible. Cet ensemble a été décrit dans FR-A-2.446.467 mentionnée précédemment. Les parties essentielles du calculateur 13 sont les suivantes : un séquenceur 30, un étage de mesure de la vitesse 31, une mémoire morte 32, un étage de mesure de pression 33 raccordé à un capteur de pression extérieur par un conducteur d'entrée 37, un étage de sécurité 34 pour se prémunir contre tout incident de fonctionnement du calculateur 13, un étage de corrections 35 relié, en particulier, à un capteur de température extérieur par un conducteur d'entrée 38 et un étage 36 de calcul proprement dit de l'angle d'avance à l'allumage. Ce calculateur a été décrit dans FR-A-2.327.421 ; FR-A-2.349.041 et FR-A-2.414.127 mentionnés précédemment. Le calculateur 13 délivre par ses sorties respectives 25 et 26 deux nombres binaires qui correspondent respectivement à l'angle de mise en conduction de la bobine 17 exprimé en nombre de dents de la cible 10 sur sa sortie 25 et à l'angle d'avance à l'allumage exprimé en nombre de dents de la cible 10 et en nombre de subdivisions d'entre-deux dents de ladite cible sur sa sortie 26. Ces deux nombres binaires parviennent par les conducteurs 25 et 26 en entrées sur un bloc de génération 14 du signal de commande de la bobine 17 qui fait l'objet de la présente invention. Ce bloc de génération du signal de commande 14 traite ces deux nombres binaires reçus au moyen de trois types de signaux délivrés par le bloc de traitement du signal capteur 12 : le signal de synchronisation Sy reçu sur le conducteur 24 dérivé du conducteur 42 ; le signal de vitesse V proportionnel à la vitesse de rotation du moteur reçu sur le conducteur 23 dérivé du conducteur 43 et un signal HCA reçu par un conducteur 22 et dont la valeur sera précisée ultérieurement. Les deux premiers signaux ont déjà été rencontrés dans les demandes de brevets mentionnés précédemment. Le bloc de génération 14 du signal de commande de la bobine fournit sur sa sortie 39 un signal de faible puissance qui est transmis à un étage de puissance amplificateur 15 dont la sortie 40 est reliée à la bobine d'allumage 17 ayant un enroulement primaire 18 et un enroulement secondaire 19 relié par une de ses extrémités à la partie centrale d'un distributeur 20 autour de laquelle tourne le bras mobile 21 qui met successivement en communication au cours de sa rotation le secondaire 19 de la bobine d'allumage 17 avec les bougies des différents cylindres du moteur pour provoquer l'explosion et la combustion du mélange contenu dans les cylindres.

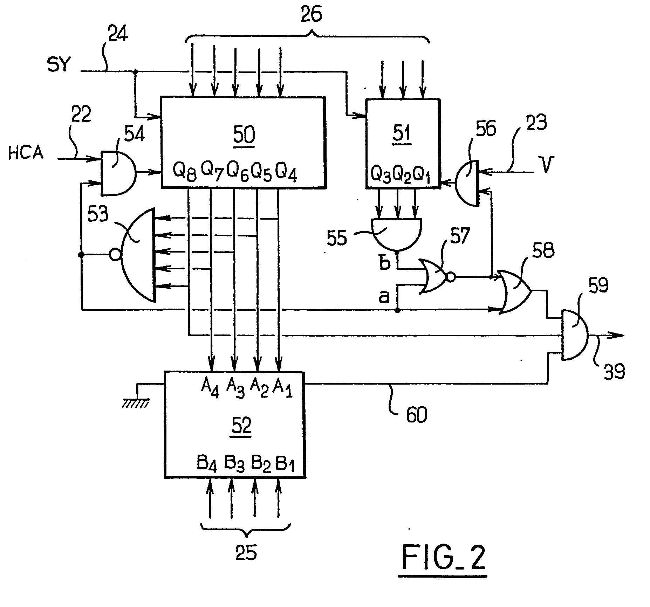

La figure 2 illustre un mode de réalisation détaillé du bloc de génération 14 du signal de commande pour la bobine d'allumage 17. Ce bloc de génération 14 comprend un premier compteur 50 de cinq chiffres binaires, un second compteur 51 de trois chiffres binaires et un additionneur 52 de quatre chiffres binaires. Les deux compteurs 50 et 51 sont connectés par leurs entrées à la sortie 26 du calculateur 13 fournissant un nombre binaire correspondant à l'angle d'avance à l'allumage avec les cinq chiffres binaires de poids le plus élevé parvenant au compteur 50 et les trois chiffres binaires de poids le plus faible parvenant au compteur 51. Ces deux compteurs 50 et 51 sont, en outre, connectés par leur entrée de chargement au conducteur 24 pour recevoir les signaux de synchronisation Sy. A l'exception de la sortie $Q_8$ de poids le plus élevé, les quatre autres sorties $Q_7$, $Q_6$, $Q_5$ et $Q_4$ du compteur 50 sont connectées à une première série d'entrées $A_4$, $A_3$, $A_2$ et $A_1$ de l'additionneur 52 à quatre chiffres binaires qui est connecté par une seconde série d'entrées $B_4$, $B_3$, $B_2$, $B_1$ à la sortie 25 du calculateur 13 délivrant un nombre binaire correspondant à l'angle de mise en conduction de la bobine 17. La sortie $Q_8$ de poids le plus élevé du compteur 50 est connectée à une entrée d'une première porte logique 59 à fonction ET dont la sortie 39 est précisément la sortie de l'étage de génération 14 du signal de commande pour la bobine 17 par l'intermédiaire de l'étage de puissance amplificateur 15. Les cinq sorties $Q_4$ à $Q_8$ du compteur 50 sont, par ailleurs, connectées en entrées sur une porte logique 53 à fonction NON-ET dont la sortie est reliée, d'une part, à une première entrée d'une porte logique 58 à fonction OU et, d'autre part, à une première entrée d'une seconde porte logique 54 à fonction ET connectée par sa seconde entrée au conducteur 22 véhiculant le signal HCA en provenance de l'étage de traitement du signal capteur 12 et par sa sortie à l'entrée horloge du compteur 50. Les trois sorties $Q_1$ à $Q_3$ du second compteur 51 sont connectées en entrées sur une troisième porte logique 55 à fonction ET dont la sortie b est connectée sur une première entrée d'une porte logique 57 à fonction NON-OU dont la sortie est connectée, d'une part, comme seconde entrée sur la porte logique 58 à fonction OU déjà rencontrée précédemment et, d'autre part, comme première entrée sur une quatrième porte logique 56 à fonction ET qui est connectée par sa sortie sur l'entrée horloge du second compteur 51. La seconde entrée de la quatrième porte logique 56 à fonction ET est connectée au conducteur 23 en provenance du bloc de traitement 12 du signal du capteur pour recevoir le signal de vitesse V. La sortie de la porte logique 58 à fonction OU est connectée comme seconde entrée sur la porte logique 59 à fonction ET dont une troisième entrée est connectée à la sortie 60 de l'additionneur 52. Par ailleurs, la seconde entrée a de la porte logique 57 à fonction NON-OU est connectée également à la sortie de la porte logique 53 à fonction NON-ET.

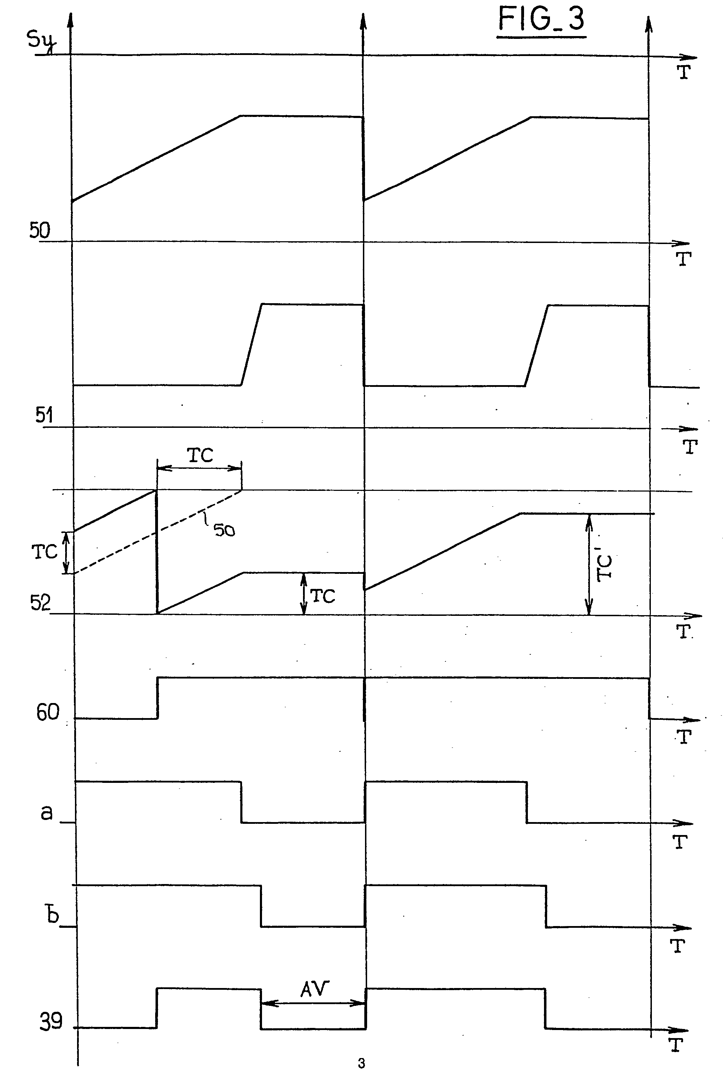

Avant d'en passer à la description d'un cas précis de fonctionnement, chiffres à l'appui, on passe en revue les différentes courbes qui sont illustrées à la figure 3 et qui représentent les signaux qui apparaissent aux points les plus importants de la figure 2 en fonction du temps. A la ligne 1, on a représenté les impulsions de synchronisation Sy qui sont transmises par le conducteur 24 sur les entrées de chargement des deux compteurs 50 et 51 dont on a représenté l'état résultant du comptage des impulsions transmises par le conducteur 26 en provenance du calculateur d'avance à l'allumage 13 en fonction du temps. La quatrième ligne représente, en fonction du temps, l'état du comptage à l'intérieur de l'additionneur 52 qui résulte de l'addition des quantités qui apparaissent sur les sorties $Q_4$ à $Q_7$ du compteur 50 et du nombre binaire délivré par le calculateur 13 sur sa sortie 25, nombre binaire qui correspond à l'angle de mise en conduction TC de la bobine de haute tension 17. En ordonnées et en abscisses, on a mis en évidence la part revenant au compteur 50 et celle qui revient à l'angle de mise en conduction T.C. On en déduit, à la ligne cinq, l'état sur le conducteur de sortie 60 qui comprend entre deux impulsions Sy successives de synchronisation, un premier intervalle de temps où le conducteur 60 est à l'état bas et un second intervalle de temps où le conducteur 60 est à l'état haut. Les deux lignes suivantes, respectivement six et sept, montrent, d'une manière analogue, l'état des conducteurs a et b connectés aux entrées respectives de la porte logique 57 à fonction NON-OU, l'état du conducteur a correspondant à l'inverse de la sortie de l'ensemble des conducteurs du compteur 50 tandis que l'état du conducteur b correspond à l'inverse de la sortie de l'ensemble des conducteurs du compteur 51.

Finalement, la dernière ligne de la figure 3 représente le signal correspondant à l'état du conducteur 39 à la sortie de la porte logique 59 à fonction ET qui récapitule l'état des trois conducteurs entrants. On y voit entre deux impulsions de synchronisation successives Sy une impulsion rectangulaire qui délimite entre son flanc montant et son flanc descendant le temps de conduction corrigé qui est alloué à la bobine d'allumage 17 et entre le flanc descendant de ladite impulsion rectangulaire et l'impulsion de synchronisation suivante Sy l'avance à l'allumage AV.

En effet, le pas de programmation du temps de conduction étant différent du pas d'incrémentation du compteur, le temps de conduction effectif sera toujours légèrement supérieur au temps de conduction /TC programmé dans la mémoire. La valeur ε de cet excès exprimée en nombre de dents sera toujours inférieure à un.

On donne à présent, pour être complet, un exemple précis et chiffré de correction destiné essentiellement au technicien, cet exemple ne pouvant, en aucune manière, réduire la portée de la présente invention. On suppose que la cible 10 est réalisée avec 44 dents et que le bloc 12 de traitement du signal capteur divise par huit l'intervalle entre deux dents successives. On obtient les deux types de signaux HCA sur le conducteur 22 à la fréquence de 44 fois la vitesse de rotation du moteur et le signal V sur les conducteurs 43 et 23 à la fréquence de 352 fois la vitesse de rotation du moteur, c'est-à-dire régénérant approximativement une impulsion par degré de rotation du vilebrequin ; mais cette erreur qui est connue et systématique peut être prise en compte lors de la mise dans la mémoire 32 des valeurs des paramètres nécessaires au calcul de la loi d'avance programmée. L'état de blocage des compteurs 50 et 51 est celui dans lequel la valeur « un » apparaît sur toutes les sorties $Q_1$ à $Q_8$, ce qui correspond au nombre 255 ; comme l'on ne peut engendrer que 176 impulsions sur chaque demi-tour de la cible 10, il convient donc de précharger l'ensemble des compteurs 50 et 51 à la valeur $255 - 176 = 79$ pour avoir un angle d'avance nul. si l'on ajoute un nombre av à cette valeur d'avance, l'ensemble des compteurs 50 et 51 arrive à l'état 255 au bout de $176 - $ av impulsions. On réalise ainsi une avance à l'allumage de av degrés. Pour éviter les erreurs dues au procédé d'interpolation employé, on incrémente le compteur 50 toutes les huit impulsions V, c'est-à-dire, à chaque dent de la cible, donc sans erreur, par action du signal HCA représentant les dents de la cible 10 sur l'entrée horloge du compteur 50 de poids huit et, quand la partie 50 du compteur de poids fort est parvenue à son maximum, on incrémente la partie de poids faible 51 en agissant sur l'entrée horloge du compteur 51 de poids un au moyen du signal degré V sur le conducteur 23.

Ainsi, pour engendrer dix degrés d'avance à l'allumage, doit-on précharger le compteur 50, 51 à $79 + 10 = 89$, soit $11 \times 8 + 1$. Pour arriver à l'état global 255 des deux compteurs, il faut donc compter : $31 - 11 = 20$ dents et $7 - 1 = 6$ impulsions dans lesquelles 31 et 7 correspondent à l'état maximal des compteurs 50 et 51 respectivement, ce qui correspond à $176 - (20 \times 8 + 6) = 10$ degrés d'avance à l'allumage.

On a décrit comment obtenir la position de chaque étincelle. Pour obtenir une étincelle, il faut faire circuler un courant dans la bobine 17. Il faut anticiper le moment de la coupure et établir le courant TC dents avant la coupure. Il suffit d'additionner la quantité TC à la valeur du compteur 50, et l'on obtient l'état de saturation de la bobine 17 TC dents avant l'étincelle, à la valeur près du contenu du compteur 51 qui constitue la valeur en excès $\varepsilon$ précitée. Dans le cas d'une grande avance à régime de rotation élevé, il se peut que la valeur du temps de conduction TC soit supérieure au nombre de dents restant à compter. La bobine 17 est alors mise immédiatement en conduction et la valeur du temps de conduction réel est égale au nombre de dents restant à compter. On obtient une étincelle d'énergie plus faible, alors qu'avec un système à décompteur et comparateur, on n'aurait pas d'étincelle du tout. Dans le cas présent, le faible signal est amplifié par le transistor de puissance 16 en sortie de l'étage de puissance 15.

Dans la partie droite de la figure 3, on a représenté ce type de fonctionnement où la quantité TC' est supérieure au nombre de dents à compter pour que le compteur 50 arrive à la saturation.

## Revendications

1. Dispositif de commande de bobine d'allumage pour moteur à combustion interne par explosion à l'intérieur de plusieurs cylindres, du type comportant une cible (10) présentant un nombre déterminé d'accidents régulièrement répartis à sa périphérie, solidaire en rotation du vilebrequin (41), au moins un capteur de position fixe (11), associé à ladite cible, une bobine d'allumage (17), un distributeur (20) d'étincelles destinées à provoquer des explosions à l'intérieur des différents cylindres du moteur successivement par l'intermédiaire de bougies associées, un étage (12) de traitement du signal prélevé par le capteur de position (11) et délivrant notamment un signal de synchronisation (Sy) et un signal de vitesse (V), un calculateur électronique d'avance à l'allumage (13) délivrant sur une première sortie (26) une valeur numérique d'angle d'avance à l'allumage et sur une seconde sortie (25) une valeur numérique brute d'angle de conduction de ladite bobine, un étage de puissance (15) pour la commande de ladite bobine d'allumage, et un étage (14) générateur de signal de commande de la bobine (17) connecté entre les deux sorties (25, 26) du calculateur d'avance électronique (13) et l'étage de puissance (15) commandant la bobine (17) d'allumage, ledit étage générateur du signal de commande (14) comprenant un premier compteur (50) et un second compteur (51) et traitant l'angle de mise en conduction de la bobine et l'angle d'avance à l'allumage au moyen de trois types de signaux (Sy, HCA, V) délivrés par le bloc de traitement du signal capteur, caractérisé en ce que, à chaque signal de synchronisation (Sy), lesdits premier et second compteurs (50, 51) sont préchargés par le calculateur (13) de la valeur numérique de l'angle d'avance à l'allumage, ladite valeur numérique étant constituée par la somme d'un nombre d'accidents de la cible chargé dans le premier compteur (50) et d'un nombre de subdivisions angulaires de résolution n fois supérieure aux accidents de la cible chargé dans le second compteur (51), en ce que le premier compteur (50) est incrémenté à son entrée d'horloge par un troisième signal (HCA) qui est engendré à la sortie de l'étage (12) de traitement de signal et dont la fréquence est le produit de la vitesse de rotation du moteur par le nombre d'accidents théoriques supportés par la périphérie de la cible (10), en ce que le second compteur (51) est incrémenté à son entrée d'horloge, lorsque le premier compteur (50) est arrivé à sa valeur de saturation, par le signal de vitesse (V) dont la fréquence est n fois supérieure à celle du troisième signal (HCA), et en ce que ledit dispositif comprend également un étage additionneur (52) relié par une première série d'entrées ($A_1$-$A_4$) sur les sorties du premier compteur (50) et par une seconde série d'entrées

(B₁-B₄) à la seconde sortie (25) du calculateur (13) fournissant la valeur brute d'angle de conduction, ainsi qu'un circuit logique (53-59) connecté entre, d'une part, l'étage additionneur (52) et les deux compteurs (50, 51) et, d'autre part, l'étage additionneur (52) et les deux compteurs (50, 51) et, d'autre part, l'étage de puissance (15), et commandant la mise en conduction de la bobine (17) par ce dernier entre une première position angulaire du vilebrequin (41) correspondant à la somme de la valeur numérique brute d'angle de conduction et le contenu du premier compteur (50) et une deuxième position angulaire du vilebrequin (41) correspondant à l'état de saturation des deux compteurs (50, 51).

2. Dispositif de commande de bobine d'allumage suivant la revendication 1, caractérisé en ce que le circuit logique comprend une première porte logique à fonction ET (59) connectée par sa sortie (39) à l'entrée de l'étage de puissance (15) de la bobine d'allumage (17), par une première entrée à la sortie (60) de l'étage additionneur (52), par une seconde entrée à la sortie (Q₈) de poids le plus élevé de l'ensemble des deux compteurs et par une troisième entrée à l'ensemble des sorties des deux compteurs (50, 51) par l'intermédiaire de deux portes logiques à fonction NON-ET (53) et d'une porte logique (58) à fonction OU.

3. Dispositif de commande de bobine d'allumage suivant la revendication 2, caractérisé en ce que ledit troisième signal (HCA) est transmis à l'entrée horloge dudit premier compteur (50) par l'intermédiaire d'une seconde porte logique (54) à fonction ET connectée par sa seconde entrée à la sortie de ladite porte logique (53) à fonction NON-ET.

4. Dispositif de commande de bobine d'allumage suivant la revendication 3, caractérisé en ce que l'ensemble des sorties du premier compteur (50) est connecté en entrées sur ladite porte logique (53) à fonction NON-ET, en ce que l'ensemble des sorties du second compteur (51) est connecté en entrées sur une troisième porte logique (55) à fonction ET reliée par sa sortie à une porte logique (57) à fonction NON-OU connectée par sa sortie, d'une part, à ladite porte logique (58) à fonction OU et, d'autre part, à une quatrième porte logique (56) à fonction ET, connectée par sa seconde entrée (23) pour recevoir ledit signal de vitesse (V) et par sa sortie à l'entrée horloge dudit second compteur (51).

5. Dispositif de commande de bobine d'allumage suivant la revendication 4, caractérisé en ce que la sortie de ladite porte logique (53) à fonction NON-ET est également reliée comme seconde entrée sur la porte logique (57) à fonction NON-OU.

## Claims

1. Device for controlling the ignition coil for an internal combustion engine involving combustion within a plurality of cylinders, of the type comprising a target member (10) which has a given number of recess or projection means regularly distributed at its periphery and which is fixed in respect of rotary movement to the crank shaft (41), at least one fixed position detector (11) associated with said target member, an ignition coil (17), a spark distributor (20) for distributing sparks for causing combustion within the different cylinders of the engine in succession by means of associated sparking plugs, a stage (12) for processing the signal picked up by the position detector (11) and supplying in particular a synchronisation signal (Sy) and a speed signal (V), an electronic ignition advance computing means (13) which at a first output (26) produces a digital value in respect of ignition advance angle and, at a second output (25), a gross digital value in respect of the angle of conduction of said coil, a power stage (15) for controlling said ignition coil, and a stage (14) for generating a signal for controlling said coil (17) which is connected between the two outputs (25, 26) of the electronic advance computing means (13) and the power stage (15) for controlling the ignition coil (17), said control signal generating stage (14) comprising a first counter (50) and a second counter (51) and processing the coil conduction angle and the ignition advance angle by means of three types of signals (Sy, HCA, V) which are supplied by the unit for processing the detector signal, characterised in that, at each synchronisation signal (Sy), said first and second counters (50, 51) are preloaded by the computing means (13) with the digital value in respect of the ignition advance angle, said digital value being formed by the sum of a number of recess or projection means of the target member, which is loaded into the first counter (50), and a number of angular subdivisions of resolution n times greater than the recess of projection means of the target member, which is loaded into the second counter (51), that the first counter (50) is incremented at its clock input by a third signal (HCA) which is generated at the output of the signal processing stage (12) and the frequency of which is the product of the speed of rotation of the engine by the number of theoretical recess or projection means carried by the periphery of the target member (10), that the second counter (51) is incremented at its clock input when the first counter (50) has reached its saturation value, by the speed signal (V), the frequency of which is n times greater than that of the third signal (HCA), and that said device also comprises an adding stage (52) which is connected by a first series of inputs (A₁-A₄) to the outputs of the first counter (50) and by a second series of inputs (B₁-B₄) to the second output (25) of the computing means (13), providing the gross conduction angle value, and a logic circuit (53-59) which is connected between on the one hand the adding stage (52) and the two counters (50, 51) and, on the other hand, the power stage (15) and which controls the coil (17) being caused to conduct by the latter between a first angular position of the crank shaft (41) corresponding to the sum of the gross digital value in respect of

angle of conduction and the content of the first counter (50) and a second angular position of the crank shaft (41) corresponding to the saturation state of the two counters (50, 51).

2. An ignition coil control device according to claim 1, characterised in that the logic circuit comprises a first logic AND gate (59) which is connected by its output (39) to the input of the power stage (15) of the ignition coil (17), by a first input to the output (60) of the adding stage (52), by a second input to the highest-weight output $(Q_8)$ of the assembly of the two counters, and by a third input to the array of the outputs of the two counters (50, 51) by way of two logic NAND gates (53) and a logic OR gate (58).

3. An ignition coil control device according to claim 2, characterised in that said third signal (HCA) is transmitted to the clock input of said first counter (50) by means of a second logic AND gate (54) which is connected by its second input to the output of said logic NAND gate (53).

4. An ignition coil control device according to claim 3, characterised in that the array of the outputs of the first counter (50) is connected as inputs to said logic NAND gate (53), that the array of the outputs of the second counter (51) is connected as inputs to a third logic AND gate (55) which is connected by its output to another logic NOR gate (57) which is connected by its output on the one hand to said logic OR gate (58) and on the other hand to a fourth logic AND gate (56) which is connected by its second input (23) to receive said speed signal (V) and by its output to the clock input of said second counter (51).

5. An ignition coil control device according to claim 4, characterised in that the output of said logic NAND gate (53) is also connected as second input to the logic NOR gate (57).

**Ansprüche**

1. Steuerungsvorrichtung für die Zündspule eines mehrzylindrischen Verbrennungsmotors, mit einem elektronischen Rechner zur Zündverstellung, mit einer Markierungsscheibe (10), die eine bestimmte Anzahl von Vorsprüngen aufweist, welche regelmäßig entlang ihres Umfangs verteilt sind und die drehfest mit der Kurbelwelle (41) verbunden ist, mit wenigstens einem ortsfesten Positionsfühler (11), der der Markierungsscheibe zugeordnet ist, mit einer Zündspule (17), einem Funkenverteiler (20) zum aufeinanderfolgenden Auslösen von Explosionen in den verschiedenen Zylindern des Motors mittels zugeordneter Zünkerzen, mit einer Stufe (12) zur Verarbeitung des vom Positionsfühler (11) stammenden Signals und zur Abgabe insbesondere eines Synchronisationssignals Sy und eines Geschwindigkeitssignals V, mit einem elektronischen Rechner (13) zur Zündverstellung, der an einem ersten Ausgang (26) einem numerischen Wert für den Zündverstellwinkel abgibt und der an einem zweiten Ausgang (25) einen numerischen Bruttowert für den Winkel des leitenden Zustands der Zündspule abgibt, mit einer Leistungsstufe (15) zur Steuerung der Zündspule und mit einer Stufe (14) zur Erzeugung des Steuersignals für die Spule (17), welche zwischen beiden Ausgängen (25, 26) des elektronischen Rechners (13) zur Zündverstellung und der Leistungsstufe (15) zur Steuerung der Zündspule (17) geschaltet ist, wobei die Stufe (14) zur Erzeugung des Steuersignals einem ersten Zähler (50) und einen zweiten Zähler (51) aufweist und den Winkel des leitenden Zustands der Spule und ben Verstellwinkel der Zündung mittels dreier Arten von Signalen Sy, HCA, V verarbeitet, die von Verarbeitungsschaltung des Fühlersignals stammen, dadurch gekennzeichnet, daß bei jedem Synchronisationssignal Sy die ersten und zweiten Zähler (50, 51) mit dem numerischen Wert für den Zündverstellwinkel vom Rechner (13) vorgespeichert werden, wobei dieser numerische Wert aus der Summe besteht einer Anzahl von im ersten Zähler (50) gespeicherten Vorsprüngen der Markierungsscheibe und einer Anzahl von Winkelunterteilungen mit einer Auflösung, die n-mal größer ist als die im zweiten Zähler (51) gespeicherten Vorsprünge der Markierungsscheibe, daß der erste Zähler (50) an seinem Zeiteingang mit einem dritten Signal HCA beautschlagt wird, das am Ausgang der Stufe (12) für die Signalverarbeitung erzeugt wird und dessen Frequenz des Produkt aus der Umdrehungsgeschwindigkeit des Motors und der Anzahl der theoretischen, vom Umfang der Markierungsscheibe (10) getragenen Vorsprünge ist, daß der zweite Zähler (51) an seinem Zeiteingang, wenn der erste Zähler (50) seinen Sättigungswert erreicht hat, mit dem Geschwindigkeitssignal V beaufschlagt wird, dessen Frequenz n-mal größer ist als diejenige des dritten Signals HCA und daß die Vorrichtung außerdem eine Addierstufe (52) aufweist, die über eine erste Anzahl Eingänge $A_1$-$A_4$ mit den Ausgängen des ersten Zählers (50) und über eine zweite Anzahl Eingänge $B_1$-$B_4$ mit dem zweiten Ausgang (25) des Rechners (13) zur Lieferung des Bruttowerts für den Winkel des leitenden Zustands verbunden ist, sowie einen logischen Schaltkreis (53-59) aufweist, der einerseits mit der Addierstufe (52) und den beiden Zählern (50, 51) verbunden ist und andererseits mit der Leistungsstufe (15) und welcher das Einschalten der Spule (17) mittels der Ersteren steuert zwischen einer ersten Winkelstellung der Kurbelwelle (41), die der Summe des numerischen Bruttowerts des Winkels für den leitenden Zustand und dem Inhalt des ersten Zählers (50) entspricht, und einer zweiten Winkelstellung der Kurbelwelle (41), die dem Sättigungszustand der beiden Zähler (50, 51) entspricht.

2. Steuerungsvorrichtung für die Zündspule nach Anspruch 1, dadurch gekennzeichnet, daß der logische Schaltkreis ein erstes logisches UND-Tor (59) aufweist, dessen Ausgang (39) mit dem Eingang der Leistungsstufe (15) der Zündspule (17) verbunden ist, dessen einer Eingang mit dem Ausgang (60) der Addierstufe (52) verbunden ist, dessen zweiter Eingang mit dem höchstwertigen

Ausgang $Q_8$ der Gesamtheit der beiden Zähler verbunden ist und dessen dritter Eingang mit der Gesamtheit der Ausgänge der beiden Zähler (50, 51) über zwei logische Tor-Schaltungen der Wirkung NEIN-UND (53) und eine logische Tor-Schaltung (58) der Wirkung ODER verbunden ist.

3. Steuerungsvorrichtung für die Zündspule nach Anspruch 2, dadurch gekennzeichnet, daß das dritte Signal HCA dem Zeiteingang der ersten Zählers (50) über ein zweites logisches UND-Tor (54) zugeführt wird, dessen zweiter Eingang mit dem Ausgang der logischen NEIN-UND-Torschaltung (53) verbunden ist.

4. Steuerungsvorrichtung für die Zündspule nach Anspruch 3, dadurch gekennzeichnet, daß die Gesamtheit der Ausgänge des ersten Zählers (50) mit den Eingängen der logischen NEIN-UND-Tor-Schaltung (53) verbunden ist, daß die Gesamtheit der Ausgänge des zweiten Zählers (51) mit den Eingängen einer dritten logischen UND-Tor-Schaltung (55) verbunden ist, deren Ausgang mit einer logischen NEIN-ODER-Tor-Schaltung (57) verbunden ist, deren Ausgang einerseits mit der logischen ODER-Tor-Schaltung (58) und andererseits mit einer vierten logischen UND-Tor-Schaltung (56) verbunden ist, deren zweiter Eingang (23) zur Aufnahme des Geschwindigkeitssignals V geschaltet ist und deren Ausgang mit dem Zeiteingang des zweiten Zählers (51) verbunden ist.

5. Steuerungsvorrichtung für die Zündspule nach Anspruch 4, dadurch gekennzeichnet, daß der Ausgang der logischen NEIN-UND-Tor-Schaltung (53) gleichzeitig als zweiter Eingang mit der logischen NEIN-ODER-Tor-Schaltung (57) verbunden ist.

FIG_1

FIG_2

FIG_3